# EUROPEAN PATENT APPLICATION

(11) **EP 1 259 082 A2**
(43) Date of publication of application: **20.11.2002**
(21) Application number: 02253337.6
(22) Date of filing: 14.05.2002
(51) Int. Cl.: H04N 7/62

(54) **Video display apparatus, audio mixing apparatus, video-audio output apparatus and video-audio synchronizing method**

(30) Priority: 17.05.2001 JP 2001148530
(71) Applicant: Pioneer Corporation, Meguro-ku, Tokyo (JP)
(72) Inventor: Usuba, Hidemi, c/o Pioneer Corporation, Tokorozawa-shi, Saitama (JP); Minoshima, Kunirhio, c/o Pioneer Corporation, Tokorozawa-shi, Saitama (JP); Ono, Kinya, c/o Pioneer Corporation, Tokorozawa-shi, Saitama (JP); Tenma, Tetsuya, c/o Pioneer Corporation, Tokorozawa-shi, Saitama (JP); Nishimura, Shinsuke, c/o Pioneer Corporation, Tokorozawa-shi, Saitama (JP); Kimura, Tomohiro, c/o Pioneer Corporation, Tokorozawa-shi, Saitama (JP)
(74) Representative: Haley, Stephen

(57) **Abstract**

In a video-audio synchronizing method for synchronizing video and audio reproduced respectively by a monitor 300 and an amplifier 400 connected to a serial bus 100 to which video from a DVD player 200 and audio associated with the video are supplied, the monitor 300 sends out delaytime information caused by an intrinsic delay element for video display to the amplifier 400 through the serial bus 100 as a control command, and the amplifier 400 delays the audio by time necessary for synchronization between the video and the audio according to the control command and outputs the audio.

## Description

The present invention relates to a video display apparatus, an audio mixing apparatus, a video-audio output apparatus and a video-audio synchronizing method for transmitting video information and audio information on a network through a digital interface and matching a time lag between video display of the video display apparatus and audio output of the audio mixing apparatus connected to the network.

In recent years, it is expected that proliferation of electronic equipment which mounts a digital interface typified by IEEE1394 will connects all the electronic equipment to a network in the future. For example, in AV equipment, a DVD player for reproducing video and audio, a monitor for displaying the video and an amplifier for receiving the audio are mutually connected through the network.

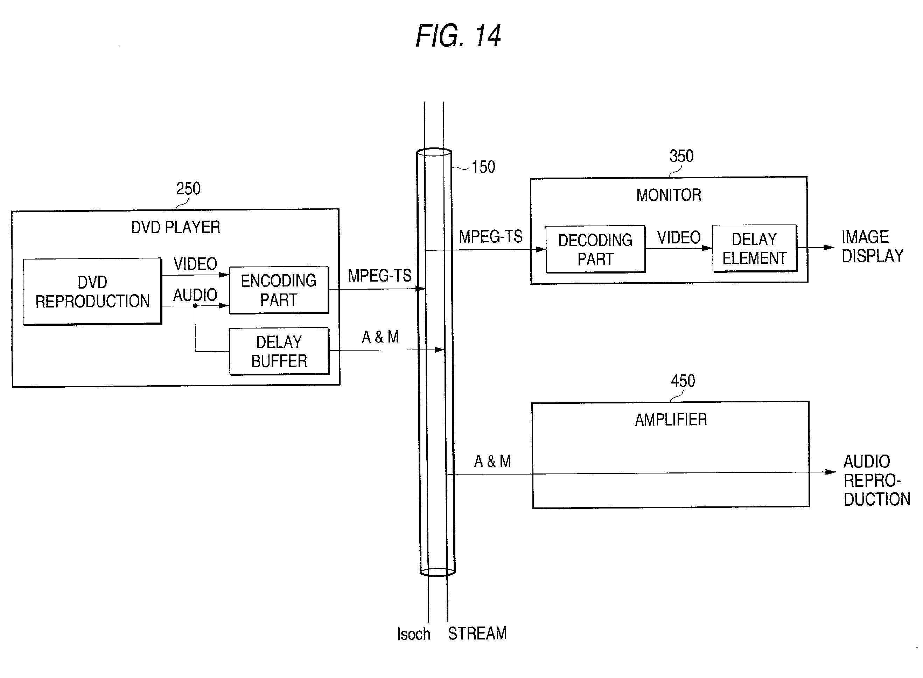

Fig. 14 shows a schematic diagram of AV equipment connected to a network, and a DVD player 250, a monitor 350 and an amplifier 450 are connected through a serial bus 150 of IEEE1394 standards . DVD video standards and DVD audio standards are present in DVD standards. It will be decided by standards that it complies with an MPEG-TS method in the case of transmitting video and audio data by the IEEE1394. Incidentally, the MPEG-TS method is to multiplex compressed moving image data by packeting and transmitting the data as a transport stream. Also, audio data without compression can optionally be transmitted by the IEEE1394 according to an A&M method.

On the other hand, in the receiving side, video-audio data of the MPEG-TS method is received by the monitor 350 and audio data of the A&M method is received by the amplifier 450. The monitor 350 decodes compressed video data and supplies data in which conversion of the number of pixels is made to a display driving circuit (not shown) for image display. The amplifier 450 amplifies transmitted audio data and then supplies the data to a speaker (not shown) for audio reproduction. As a result of this, high sound quality reproduction by the amplifier 450 along with video reproduction by the monitor 350 can be performed.

However, in the case of using a PDP (plasma display panel) particularly as the monitor 350, delay time of about 30 to 60 msec in the display driving circuit occurs unlike a television using a conventional cathode-ray tube. Then, a problem of a time lag (so-called lip synchronization) between video display by the PDP and audio output of the amplifier 450 cannot be ignored.

The invention has been made in view of the circumstances. An object of the invention is to provide a video display apparatus, an audio mixing apparatus, a video-audio output apparatus and a video-audio synchronizing method capable of transmitting video information and audio information on a network through a digital interface and matching a time lag between video display of the video display apparatus and audio output of the audio mixing apparatus connected to the network.

According to the invention, there is provided a video display apparatus (monitor 300) for being connected to a network (serial bus 100) to which video information and audio information associated with said video information are supplied and displaying the video information acquired from the network, Wherein there is provided a section for sending out delay time information with respect to video display.

According to the invention, there is provided an audio mixing apparatus (amplifier 400) for being connected to the network (serial bus 100) to which the video display apparatus is connected and mixing and outputting the audio information acquired from the network, wherein there is provided a section (delay buffer 402) for delaying the audio information acquired from the network based on the delay time information.

According to the invention, there is provided a video-audio output apparatus (DVD player 200) for being connected to the network (serial bus 100) to which the audio mixing apparatus is connected and supplying the video information and the audio information to the network, and is characterized in that there are provided a section for acquiring the delay time information from the video display apparatus (monitor 300), and a section for sending out the acquired delay time information to the audio mixing apparatus (amplifier 400).

According to the invention, there is provided a video-audio output apparatus (DVD player 200) for being connected to the network (serial bus 100) to which the video display apparatus is connected and supplying the video information and the audio information to the network, wherein there is provided a section (delay buffer 204) for delaying the audio information supplied to the network based on the delay time information.

According to the invention, there is provided a video-audio synchronizing method for matching a time lag between video display of a video display apparatus (monitor 300) connected to a network (serial bus 100) to which video information and audio information associated with said video information are supplied and audio output of an audio mixing apparatus (amplifier 400) connected to said network, wherein the audio information supplied to the network or the audio information acquired from the network is delayed based on delay time information with respect to video display which the video display apparatus has.

### In the Drawings;

Fig. 1 is a diagram showing a configuration of a network of equipment according to the invention.

Fig. 2 is a diagram showing a configuration of a DVD player which is a video-audio output apparatus according to the invention.

Fig. 3 is a diagram showing a configuration of a monitor which is a video display apparatus according to the invention.

Fig. 4 is a diagram showing a configuration of an amplifier which is an audio mixing apparatus according to the invention.

Fig. 5 is a diagram showing a flow of control commands according to a first embodiment of the invention.

Fig. 6 is a diagram showing a transmission form on a serial bus in the first embodiment of the invention.

Fig. 7 is a diagram showing a data structure within an isochronous cycle.

Fig. 8 is a diagram showing a flow of control commands according to a second embodiment of the invention.

Fig. 9 is a diagram showing a transmission form on a serial bus in the second embodiment of the invention.

Fig. 10 is a diagram showing a flow of control commands according to a third embodiment of the invention.

Fig. 11 is a diagram showing a transmission form on a serial bus in the third embodiment of the invention.

Fig. 12 is a diagram showing a flow of control commands according to a fourth embodiment of the invention.

Fig. 13 is a diagram showing a transmission form on a serial bus in the fourth embodiment of the invention.

Fig. 14 is a diagram showing a configuration of a network of equipment according to a conventional example.

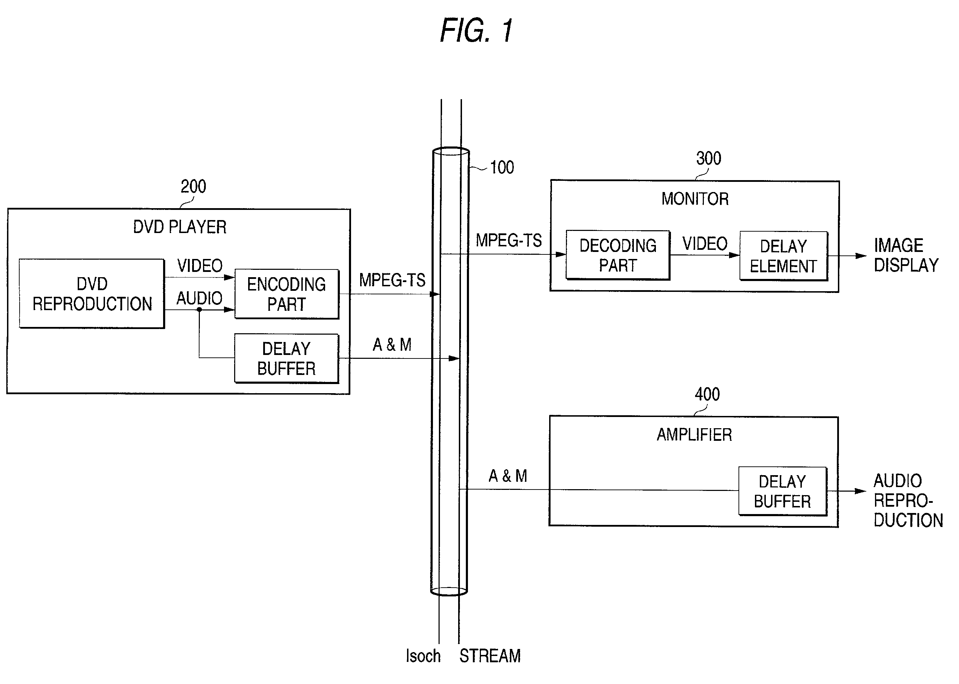

Embodiments of the invention will be described below with reference to the drawings. Fig. 1 shows a configuration of a network of equipment (node) connected to a serial bus. As shown in Fig. 1, a DVD player 200 acting as a video-audio output apparatus, a monitor 300 acting as a video display apparatus and an amplifier 400 acting as an audio mixing apparatus are connected to a serial bus 100 compliant with IEEE1394 standards which are a digital interface.

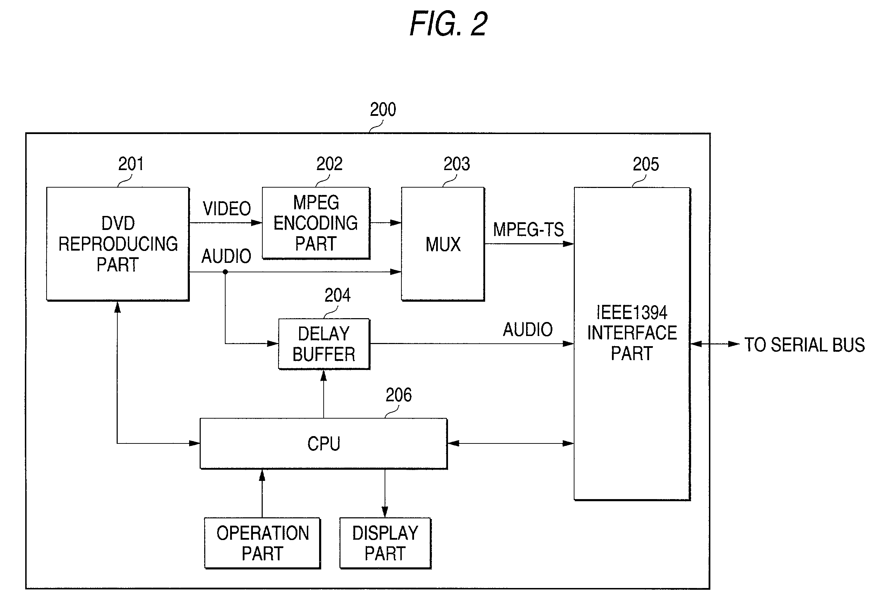

A configuration of each the equipment will be described below with reference to Figs. 2 to 4.

Fig. 2 shows a configuration of the DVD player 200 which is the video-audio output apparatus, and the DVD player 200 has a DVD reproducing part 201 for reproducing video data and audio data, an encoding part 202 for encoding the video data according to an MPEG method, a multiplexer (MUX) 203 for multiplexing the encoded video data and the audio data from the DVD reproducing part 201 by packeting and obtaining stream data (MPEG-TS), a delay buffer 204 for delaying the audio data until time specified by PTS, DST and obtaining data (A&M) synchronized with the stream data outputted from the MUX 203, an interface (I/F) part 205 for transmitting to the serial bus of IEEE1394 standards which are a digital interface, and a CPU 206 for performing centralized control (for example, delay time setting with respect to the delay buffer 204 described below) of the DVD player 200.

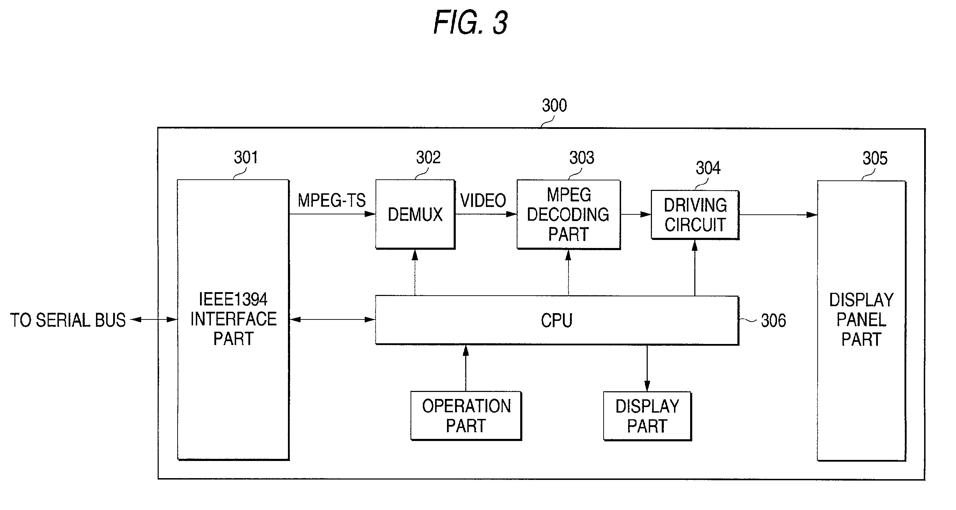

Fig. 3 shows the monitor 300 which is the video display apparatus, and the monitor 300 comprises an I/F part 301 for receiving data transmitted by an MPEG-TS method through the serial bus of the IEEE1394 method which is the digital interface, a demultiplexer (DEMUX) 302 for extracting a video stream from a video stream and an audio stream, a decoding part 303 for decoding the video stream encoded by the MPEG method and generating video data, a driving circuit 304 for making conversion to the number of pixels necessary for display based on the video data, a display panel part 305 driven by the driving circuit 304, and a CPU 306 for performing centralized control of the monitor 300.

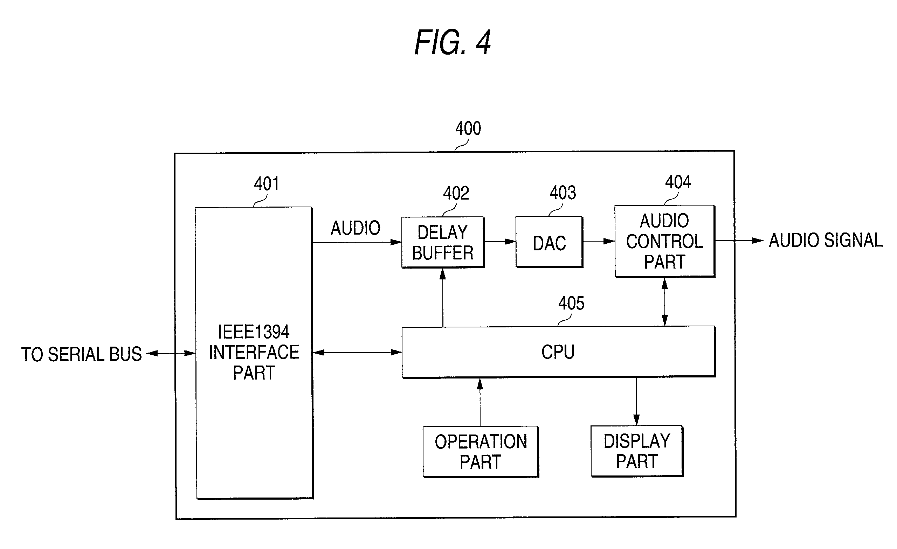

Fig. 4 shows the amplifier'400 which is the audio mixing apparatus, and the amplifier 400 comprises an I/F part 401 for receiving data transmitted by an A&M method through the serial bus of the IEEE1394 method, a delay buffer 402 for delaying the audio data, a digital-to-analog converter (DAC) 403 for converting the audio data into an analog audio signal, an audio control part 404 for controlling a component of the audio signal, and a CPU 405 for performing centralized control (for example, delay time setting with respect to the delay buffer 402 described below) of the amplifier 400.

Control between each the equipment connected to a network for achieving synchronization between video and audio will be described below with reference to first to fourth embodiments.

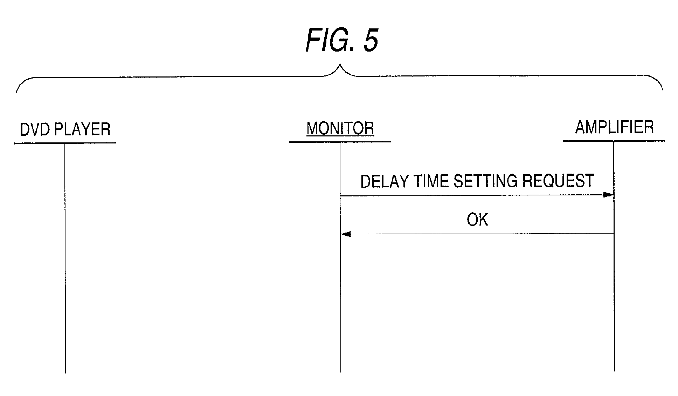

Fig. 5 shows a first embodiment, and a delay time setting request is sent out from a monitor to an amplifier and based on this request, the amplifier sets delay time in a delay buffer and answers the monitor a message to the effect that the setting is completed. Since a time lag between video and audio is caused by an intrinsic delay element such as pixel conversion made within the monitor, the video and the audio can be synchronized by delaying output of an audio signal by delay time occurring due to this delay element.

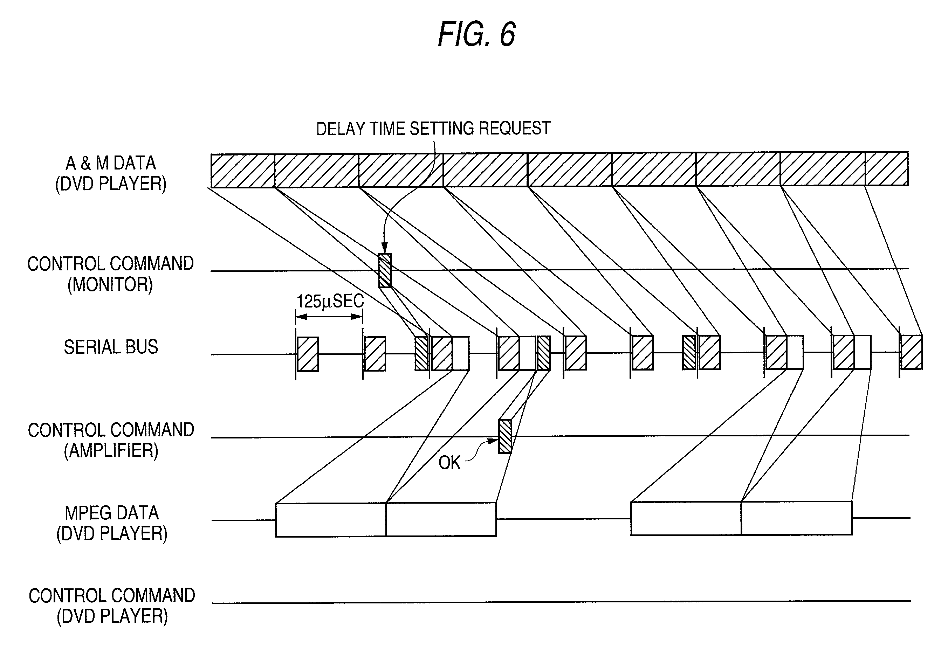

Next, a flow of control commands between a monitor and an amplifier will be described with reference to a transmission form on a serial bus shown in Fig. 6. Each information about audio data of an A&M method sent out from a DVD player, a control command indicating a delay time setting request sent out from the monitor, a control command indicating a delay time setting completion sent out from the amplifier as an answer to the control command indicating the delay time setting request and video data of an MPEG method sent out from the DVD player is inserted into an isochronous cycle which is a synchronous unit on the serial bus having a length of 125 µ sec and is transmitted.

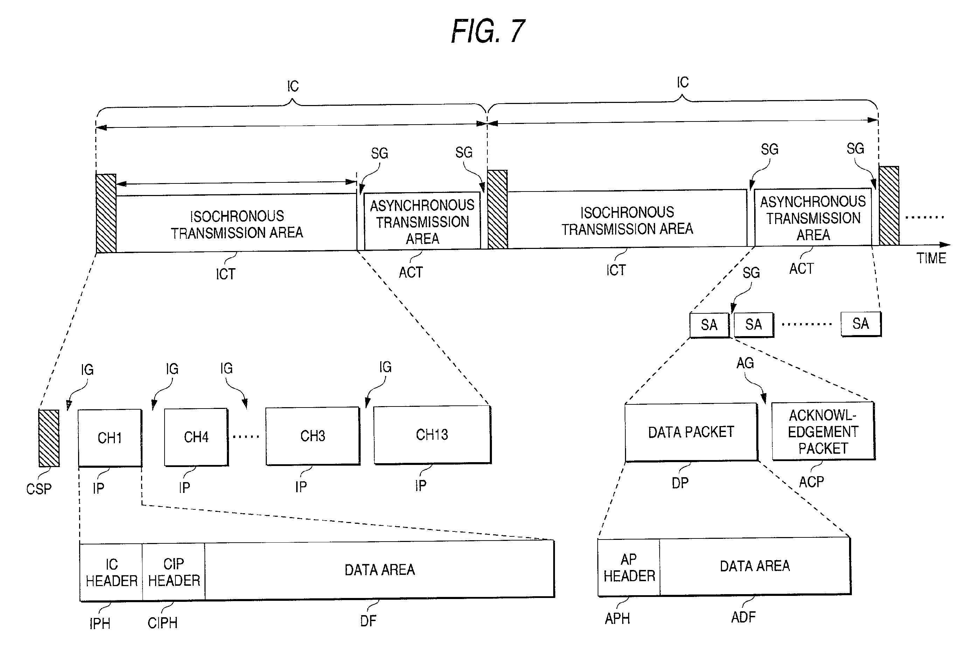

As shown in Fig. 7, a data structure within the isochronous cycle comprises a cycle start packet CSP inserted into the head of an isochronous cycle IC for matching reference time of all the nodes, an isochronous transmission area ICT formed by isochronous packets IP of plural channels (audio data of the A&M method and video data of the MPEG method) and formed by including data corresponding to each the channel in the respective isochronous packets IP, and an asynchronous transmission area ACT including asynchronous information about the control command etc. shown in Fig. 6.

A sub-action gap SG which is a time gap indicating the end of one isochronous transmission area ICT or the end of a sub-action SA is inserted into the tail of each the isochronous transmission area ICT and the tail of each the asynchronous transmission area ACT. Further, an isochronous gap IG which is a time gap indicating the end of respective packets is inserted between each of the isochronous packets IP and between the cycle start packet CSP and the leading isochronous packet IP.

The isochronous packet IP comprises an IP (Isochronous Packet) header IPH including information indicating the amount of data within each the isochronous packet IP or information indicating a channel for transmitting information within each the isochronous packet IP, a CIP (Common Isochronous Packet) header CIPH, and a data area DF including actual video information or audio information.

The asynchronous transmission area ACT comprises plural asynchronous sub-actions, and each the asynchronous sub-action comprises a data packet DP including data of control information transmitted asynchronously and an acknowledgement packet ACP including data used for an answer from a node of a sending destination. Also, an acknowledgement gap AG which is a time gap indicating the end of one data packet DP is inserted between the data packet DP and the acknowledgement packet ACP.

The data packet DP comprises an asynchronous packet header APH including information indicating a destination of each the data packet DP, and a data area ADF including a control signal.

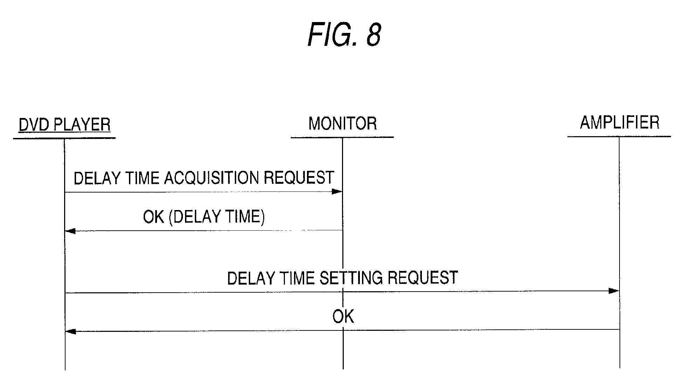

Fig. 8 shows a second embodiment, and a delay time acquisition request is sent out from a DVD player to a monitor and based on this request, the monitor answers the DVD player delay time information caused by an intrinsic delay element. Next, the DVD player sends out a delay time setting request to an amplifier and based on this request, the amplifier sets delay time in a delay buffer and answers the DVD player a message to the effect that the setting is completed. In this manner, the DVD player acquires the delay time information caused by the intrinsic delay element made within the monitor and the amplifier delays output of an audio signal by the delay time sent out from the DVD player and thereby, video and audio can be synchronized.

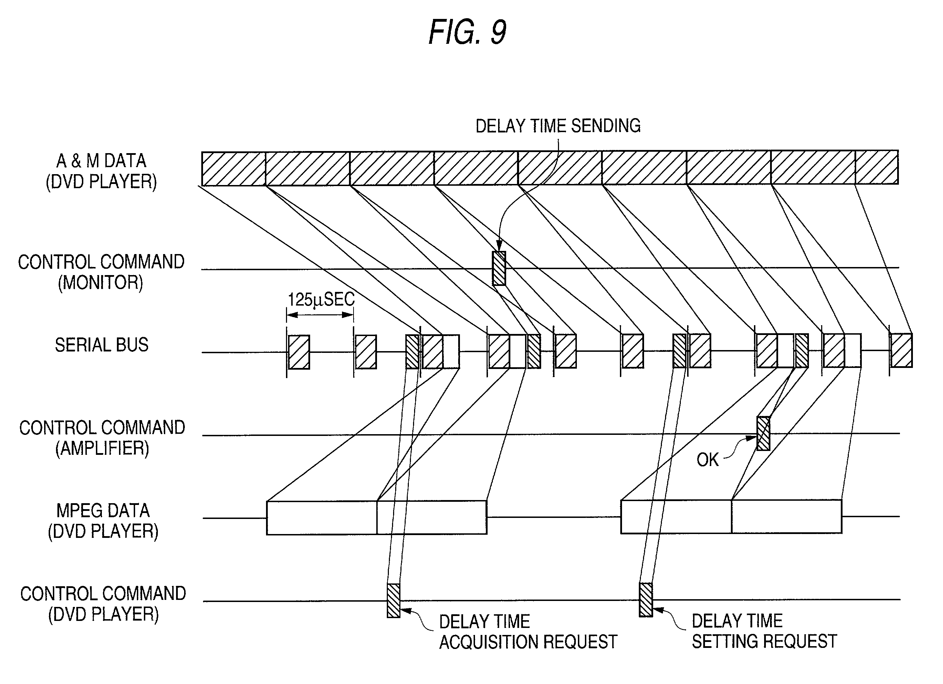

Next, a flow of control commands between a DVD player and a monitor and control commands between a DVD player and an amplifier will be described with reference to a transmission form on a serial bus shown in Fig. 9. Each information about audio data of an A&M method sent out from the DVD player, a control command indicating delay time information sent out from the monitor, a control command indicating a delay time setting completion sent out from the amplifier, video data of an MPEG method sent out from the DVD player and each control command indicating a delay time acquisition request and a delay time setting request sent out from the DVD player is inserted into an isochronous cycle on the serial bus and is transmitted. Here, the control command indicating the delay time information sent out from the monitor is an answer to the control command indicating the delay time acquisition request sent out from the DVD player, and the control command indicating the delay time setting completion sent out from the amplifier is an answer to the control command indicating the delay time setting request sent out from the DVD player. Each the command is inserted into a data area ADF forming a data packet DP in a data structure within the isochronous cycle shown in Fig. 7.

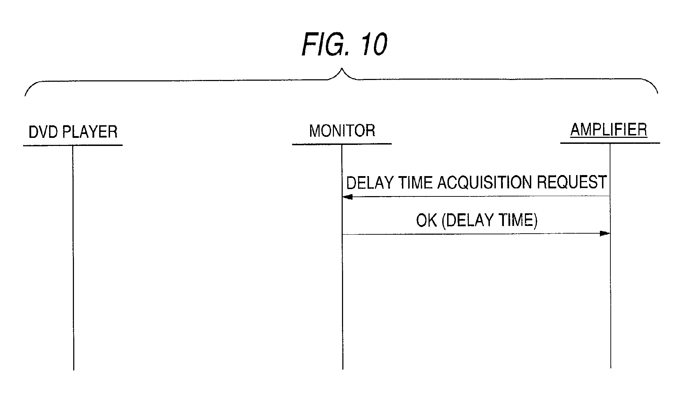

Fig. 10 shows a third embodiment, and a delay time acquisition request is sent out from an amplifier to a monitor and based on this request, the monitor sends out delay time information caused by an intrinsic delay element such as pixel conversion made within the monitor to the amplifier, and the amplifier sets delay time in a delay buffer. In this manner, the amplifier acquires the delay time information caused by the intrinsic delay element made within the monitor and the amplifier delays output of an audio signal by the delay time sent out from the monitor and thereby, video and audio can be synchronized.

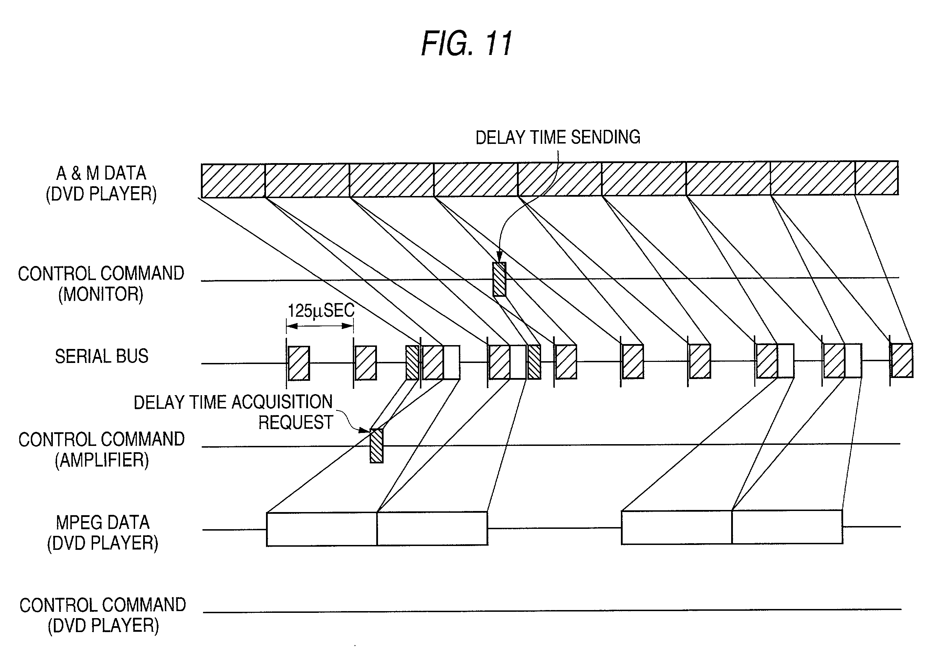

Next, a flow of control commands between an amplifier and a monitor will be described with reference to a transmission form on a serial bus shown in Fig. 11. Each information about audio data of an A&M method sent out from a DVD player, a control command indicating delay time information sent out from the monitor, a control command indicating a delay time acquisition request sent out from the amplifier and video data of an MPEG method sent out from the DVD player is inserted into an isochronous cycle on the serial bus and is transmitted. Here, the control command indicating the delay time information sent out from the monitor is an answer to the control command indicating the delay time acquisition request sent out from the amplifier. Each the control command is inserted into a data area ADF forming a data packet DP in a data structure within the isochronous cycle shown in Fig. 7.

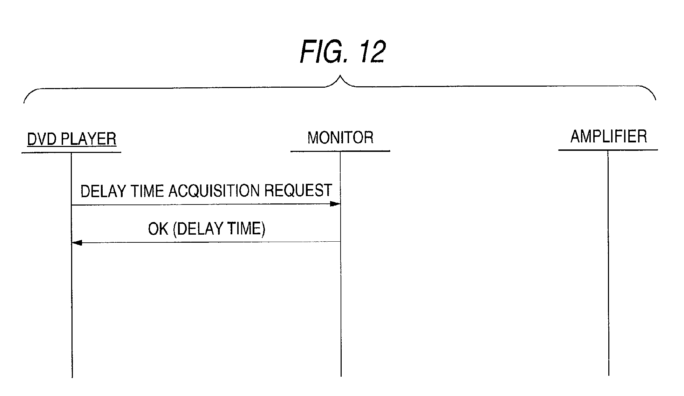

Fig. 12 shows a fourth embodiment, and a delay time acquisition request is sent out from a DVD player to a monitor and based on this request, the monitor sends out delay time information caused by an intrinsic delay element such as pixel conversion made within the monitor to the DVD player, and the DVD player sets delay time in a delay buffer. In this manner, the DVD player acquires the delay time information caused by the intrinsic delay element made within the monitor and the DVD player delays output of an audio signal by the delay time sent out from the monitor and thereby, video and audio can be synchronized. In the embodiment, the output of the audio signal can be delayed using the delay buffer provided in the DVD player, so that the video and the audio can be synchronized even when a network is constructed by a normal amplifier without providing the delay buffer.

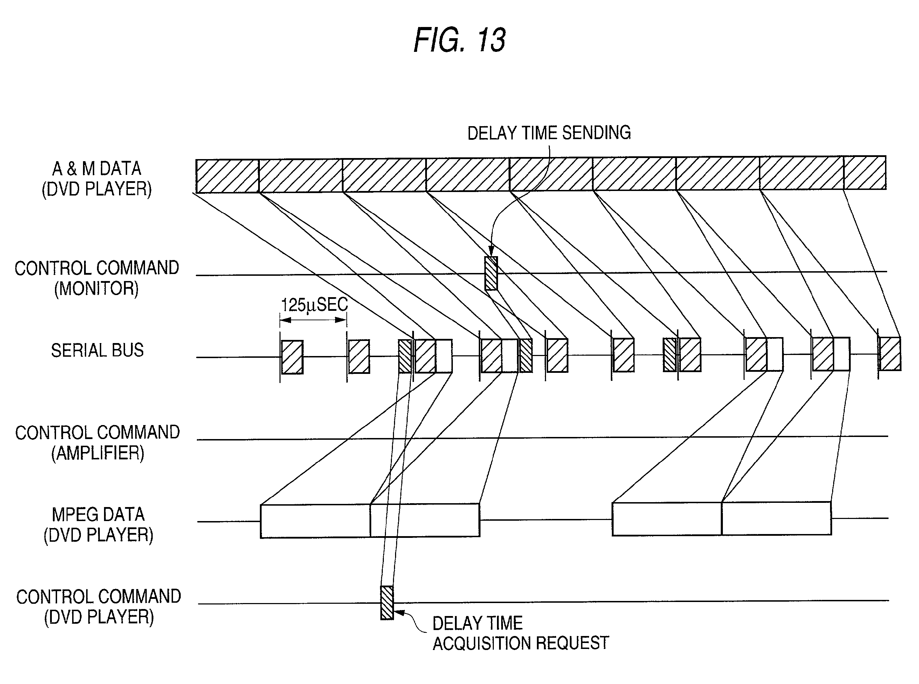

Next, a flow of control commands between an amplifier and a monitor will be described with reference to a transmission form on a serial bus shown in Fig. 13. Each information about audio data of an A&M method sent out from a DVD player, a control command indicating delay time information sent out from the monitor, video data of an MPEG method sent out from the DVD player and a control command indicating a delay time acquisition request sent out from the DVD player is inserted into an isochronous cycle on the serial bus and is transmitted. Each the command is inserted into a data area ADF forming a data packet DP in a data structure within the isochronous cycle shown in Fig. 7.

In the first to fourth embodiments, the delay time information caused by the intrinsic delay element sent out from the monitor is mainly time information necessary for pixel conversion. Therefore, time necessary for pixel conversion associated with the number of pixels of the monitor can be stored in memory as delay time information within the monitor previously. The amplifier or the DVD player sets the amount of delay of the delay buffer of the inside based on this delay time information and thereby, video displayed by the monitor connected to the network and audio reproduced by the amplifier connected to the network respectively can be synchronized. Incidentally, the amount of delay of the delay buffer may be set in consideration of delay time caused by delay elements (for example, transmission delay of the network) other than the intrinsic delay element of the monitor as well as it is set by the delay time caused by the intrinsic delay element of the monitor as described above. In this case, since the amount of delay cannot be identified uniquely, the delay buffer is manually adjusted to set the amount of delay necessary for synchronization. In the manual case, time signal video acting as reference information is transmitted from the DVD player and video and audio are respectively reproduced from the monitor and the amplifier and while checking the reproduced video and audio, the amount of delay of the delay buffer is adjusted.

As timing for automatically setting the amount of delay, the amount of delay of the delay buffer is adjusted by acquiring delay time information every the time of an operation start of equipment or acquiring delay time information every regular period during operation continuation of the equipment as well as the amount of delay is set in the delay buffer by acquiring delay time information at the time when the equipment is connected to the network.

Also, in the first to fourth embodiments, the case that video and audio from the DVD player synchronize in an output stage has been described, but even when the video and the audio do not synchronize in the output stage from the DVD player, the video displayed by the monitor and the audio from the amplifier can be synchronized in the final output stage by adjusting the amount of delay of the delay buffer of the amplifier or the DVD player. Therefore, when the amount of delay is adjusted in the delay buffer of the amplifier, the delay buffer of the DVD player can be omitted and a circuit configuration can be simplified. Also, when the amount of delay is adjusted in the delay buffer of the DVD player, the delay buffer of the amplifier can be omitted and the circuit configuration can be simplified.

As described above, according to the invention, video information and audio information can be transmitted on a network through a digital interface to match a time lag between video display of a video display apparatus and audio output of an audio mixing apparatus connected to the network.

## Claims

1. A video display apparatus comprising:
an interface to be connected to a network, the interface for receiving video information and audio information associated with the video information; and
a display for displaying the video information,
wherein the interface sends out delay time information on displaying the video information.

2. An audio mixing apparatus to be connected to a network to which a video display apparatus is connected, the video display apparatus including an interface to be connected to the network, the interface for receiving video information and audio information associated with the video information, and a display for displaying the video information, wherein the interface sends out delay time information on displaying the video information, the audio mixing apparatus comprising:
an interface to be connected to the net work, the interface for receiving the audio information and the delay time information from the network;
a mixer for mixing the audio information; and
a delay section for delaying the audio information based on the delay time information.

3. A video-audio output apparatus to be connected to a network to which to which a video display apparatus and an audio mixing apparatus are connected, the video display apparatus including an interface to be connected to the network, the interface for receiving video information and audio information associated with the video information, and a display for displaying the video information, wherein the interface sends out delay time information on displaying the video information, the audio mixing apparatus including an interface to be connected to the network, the interface for receiving the audio information and the delay time information from the network, a mixer for mixing the audio information, a delay section for delaying the audio information based on the delay time information, the video-audio output apparatus comprising:
a reproduction unit for reproducing the video information and the audio information;
an interface to be connected to the network, the interface for receiving the delay time information from the video display apparatus via the network and outputting the video information and the audio information to the network; and
a storage for storing the delay time information,
wherein the delay time information is output to the audio mixing apparatus.

4. A video-audio output apparatus to be connected to the network to which a video display apparatus is connected, the video display apparatus including an interface to be connected to a network, the interface for receiving video information and audio information associated with the video information, and a display for displaying the video information,
wherein the interface sends out delay time information on displaying the video information, the video-audio output apparatus comprising:
a reproduction unit for reproducing the video information and the audio information;
an interface to be connected to the network, the interface for receiving the delay time information from the video display apparatus via the network;
an interface to be connected to the network, the interface for receiving the delay time information from the video display apparatus via the network; and
a delay section for delaying the audio information based on the delay time information,
wherein the audio information delayed is output to the network.

5. A video-audio synchronizing method of matching a time lag between video display of a video display apparatus connected to a network to which video information and audio information associated with the video information are supplied and audio output of an audio mixing apparatus connected to the network the method comprising:
acquiring a delay time information with respect to the video display from the video display apparatus via the network; and
delaying the audio information supplied to the network or acquired from the network based on the delay time information.

6. A network system comprising:
(a) a video display apparatus comprising:
a first interface to be connected to a network, the first interface for receiving video information and audio information associated with the video information; and
a display for displaying the video information,
wherein the interface sends out delay time information on displaying the video information; and
(b) a video-audio output apparatus comprising:
a reproduction unit for reproducing the video information and the audio information;
an interface to be connected to the network, the interface for receiving the delay time information from the video display apparatus via the network;
a second interface to be connected to the network, the interface for receiving the delay time information from the video display apparatus via the network; and
a delay section for delaying the audio information based on the delay time information,
wherein the audio information delayed is output to the video display apparatus via the network.

7. A network system comprising:
(a) a video display apparatus comprising:
a first interface to be connected to a network, the interface for receiving video information and audio information associated with the video information; an
a display for displaying the video information,
wherein the interface sends out delay time information on displaying the video information;
(b) an audio mixing apparatus including:
a second interface to be connected to the network, the second interface for receiving the audio information and the delay time information from the network;
a mixer for mixing the audio information; and
a delay section for delaying the audio information based on the delay time information; and
(c) a video-audio output apparatus comprising:
a reproduction unit for reproducing the video information and the audio information;
a third interface to be connected to the network, the third interface for receiving the delay time information from the video display apparatus via the network and outputting the video information and the audio information to the network; and
a storage for storing the delay time information,
wherein the third interface outputs the delay time information to the audio mixing apparatus.
